# FASCICULE DE BREVET EUROPEEN

(11) **EP 1 085 992 B1**
(45) Date de publication et mention de la délivrance du brevet: **03.12.2003**
(21) Numéro de dépôt: 00918973.9
(22) Date de dépôt: 14.04.2000
(51) Int. Cl.: B60G 11/23, F16F 1/38, F16F 1/48, F16F 3/087

(54) **ELEMENT FORMANT ARTICULATION DE SUSPENSION ET RESSORT DE TORSION, EN PARTICULIER POUR VEHICULE**
ELEMENT DAS ALS AUFHÄNGUNGSGELENK UND TORSIONSFEDER AUSGESTALTET IST, INSBESONDERE FÜR FAHRZEUGE
ELEMENT FORMING A SUSPENSION JOINT AND A TORSION SPRING ESPECIALLY FOR A VEHICLE

(30) Priorité: 16.04.1999 FR 9904793
(43) Date de publication de la demande: 28.03.2001
(73) Titulaire: Compagnie Générale des Etablissement Michelin-Michelin & Cie, 63000 Clermont-Ferrand (FR)
(72) Inventeur: DE FONTENAY, Etienne, F-58300 Decize (FR)
(74) Mandataire: Abello, Michel
(86) Numéro de dépôt international: FR0000962
(87) Numéro de publication internationale: WO00063032

(56) Documents cités:
- EP-A- 0 475 537
- DE-A- 1 580 358
- DE-A- 1 630 901
- DE-A- 2 723 497
- FR-A- 2 517 606
- US-A- 2 951 710
- US-A- 3 121 560
- US-A- 3 913 692
- US-A- 3 930 550

## Description

L'invention est relative à un élément formant articulation de suspension et ressort de torsion, propre à travailler en torsion et en compression/traction et destiné à être installé entre deux pièces susceptibles d'une rotation relative limitée autour d'un axe de rotation et de déplacements relatifs limités dans au moins une direction radiale.

L'élément, objet de l'invention, est du genre de ceux qui comprennent une armature extérieure propre à être. rendue solidaire de l'une des pièces, une armature intérieure propre à être rendue solidaire de l'autre pièce, et un manchon de liaison en matière élastomère solidaire sans glissement possible des armatures intérieure et extérieure.

L'invention concerne plus particulièrement, mais non exclusivement, un élément formant articulation de suspension et ressort de torsion pour véhicule, l'une des pièces pouvant être constituée par une traverse tubulaire et l'autre pièce par un bras de suspension.

Un élément de ce type est connu, par exemple d'après DE-A-1580358. L'armature extérieure est formée par un tube s'étendant suivant toute la largeur du véhicule tandis que l'armature intérieure est constituée par un tube de plus petit diamètre et de plus petite longueur prévu de chaque côté du véhicule. Des moyens de liaison en matière élastomère, disposés entre les tubes, sont écartés axialement les uns des autres pour le passage de goupilles assurant l'ancrage de l'armature intérieure de l'articulation sur l'une des pièces. L'encombrement axial de l'articulation, pour des caractéristiques de raideur déterminées, est relativement important. En outre, la fabrication d'une telle articulation est contraignante et sa structure ne permet pas une modification rapide et aisée pour adapter les caractéristiques de raideur torsionnelle et radiale.

Le brevet allemand 27 23 497 au nom du même demandeur décrit pratiquement la même chose et présente les mêmes inconvénients.

Dans le brevet américain US 3 121 560 REED, on a décrit une suspension constituée par deux tubes concentriques disposés l'un dans l'autre et reliés l'un à l'autre par une matière élastomère, cet ensemble étant destiné à constituer une suspension travaillant dans le sens axial des deux tubes concentriques.

Dans le brevet américain US 3 930 550, on a décrit une barre de torsion dont les mouvements sont contretenus par un système élastique constitué d'un élastomère disposé entre deux tubes concentriques. Ce système élastique n'offre qu'une résistance à la torsion et n'a aucune caractéristique particulière en ce qui concerne sa résistance radiale.

Un élément formant articulation de suspension et ressort de torsion en accord avec le préambule de la revendication 1 est divulgué dans le document FR 2 517 606 A.

L'invention a pour but, surtout, de fournir un élément formant articulation de suspension et ressort de torsion du genre défini précédemment qui offre une grande souplesse de fabrication et qui permette une adaptation aisée des caractéristiques de raideur. On souhaite également que cet élément permette d'obtenir, pour une raideur torsionnelle déterminée, une raideur radiale relativement faible, notamment pour améliorer le confort vibratoire et acoustique d'un train de roues de véhicule en contact avec le sol.

Selon un premier mode de réalisation de l'invention, l'élément formant articulation de suspension et ressort de torsion comporte une sous-armature tubulaire extérieure, une sous-armature tubulaire intérieure et un manchon intermédiaire de liaison en matière élastomère, solidaire sans glissement possible des sous-armatures extérieure et intérieure ; ledit manchon en élastomère comportant au moins deux alvéoles ; de telle sorte que la raideur radiale de l'articulation soit significativement réduite au moins dans certaines directions sans que sa raideur torsionnelle ne soit significativement réduite

Chaque alvéole peut s'étendre sur tout ou partie de la circonférence du manchon.

Ledit manchon peut comporter une pluralité d'alvéoles, disposées parallèlement les unes aux autres, le long de l'axe longitudinal de la suspension.

Les alvéoles peuvent être disposées par paires, symétriquement à l'axe longitudinal de la suspension, en formant deux arcs de cercle dont l'angle peut varier entre 30° et 120°, ce qui permet de déterminer à volonté le degré d'affaiblissement de la raideur radiale.

Les alvéoles ont, de préférence, une section trapézoïdale, aux angles arrondis, la grande base étant située sur la sous-armature extérieure.

Selon un deuxième mode de réalisation de l'invention l'élément formant articulation de suspension et ressort de torsion du genre défini précédemment, est caractérisé par le fait qu'il comprend au moins deux éléments de base travaillant en parallèle, chaque élément de base comprenant une sous-armature extérieure, une sous-armature intérieure et un manchon intermédiaire de liaison en matière élastomère solidaire sans glissement possible des sous-armatures extérieure et intérieure, dont au moins un flanc présente une concavité sur au moins une partie de sa circonférence, les éléments de base étant disposés bout à bout de sorte que l'armature extérieure et l'armature intérieure sont formées respectivement par une succession de sous-armatures indépendantes et adjacentes, tandis que les concavités des flancs forment au moins une alvéole au niveau de la matière élastomère grâce à quoi, pour une rigidité en torsion déterminée de l'articulation, la rigidité radiale est abaissée sous un encombrement axial faible.

De préférence, une concavité est prévue sur chaque flanc du manchon intermédiaire de liaison en matière élastomère.

La concavité prévue sur un ou chaque flanc du manchon de liaison peut s'étendre suivant toute la circonférence ; dans ce cas, aucune indexation angulaire n'est imposée lors du montage de l'élément de base, la rigidité radiale étant sensiblement constante quel que soit l'angle polaire.

Selon une autre possibilité, la concavité prévue sur le ou chaque flanc du manchon de liaison s'étend suivant une partie seulement de la circonférence, et les éléments de base successifs d'une articulation de suspension ont même orientation angulaire de sorte que les concavités soient côte à côte ainsi que les parties pleines des flancs. La rigidité radiale d'une telle articulation peut ainsi varier suivant l'angle polaire de la direction radiale considérée.

En particulier, il existe une direction radiale selon laquelle la raideur radiale est maximale, la raideur radiale étant minimale selon la direction perpendiculaire à la précédente.

Généralement, la sous-armature extérieure et la sous-armature intérieure de chaque élément de base est métallique et le manchon intermédiaire de liaison, en matière élastomère, est adhérisé extérieurement et intérieurement respectivement à la sous-armature extérieure et à la sous-armature intérieure.

L'élément formant articulation de suspension et ressort de torsion peut comporter, par exemple, quatre ou huit éléments de base disposés bout à bout.

La raideur torsionnelle peut être de l'ordre de 34 mN/degré d'angle. La raideur radiale peut être de l'ordre de 4 kN/mm.

Ainsi, l'élément selon l'invention permet d'obtenir une réduction significative de la raideur radiale au moins selon certaines directions sans réduction significative de la raideur de torsion. Il reste inévitable que la raideur de torsion diminue si l'on introduit des alvéoles, même locales. Mais, en tout état de cause, le rapport raideur radiale/raideur de torsion diminue.

L'invention consiste, mises à part les dispositions exposées ci-dessus, en un certain nombre d'autres dispositions dont il sera plus explicitement question ci-après à propos d'exemples de réalisation décrits en référence au dessin annexé, mais qui ne sont nullement limitatifs.

Sur ce dessin :
la figure 1 est une demi-coupe verticale d'un élément formant articulation de suspension et ressort de torsion selon l'invention ;
la figure 2 est une vue de gauche par rapport à la figure 1 ;
la figure 3 est une section par un plan diamétral illustrant un profil possible pour les flancs du manchon intermédiaire en matière élastomère ;
la figure 4 montre, semblablement à la figure 3, une variante de profil des flancs du manchon intermédiaire ;
la figure 5 représente, en coupe selon la ligne brisée V-V de la figure 6, une variante de réalisation de l'élément formant articulation ;
la figure 6 est une vue de gauche de l'élément formant articulation de la figure 5 ;
la figure 7 est une section suivant la ligne VII-VII de la figure 6 d'un élément de base de l'élément formant articulation ;
la figure 8 est une demi-coupe verticale d'un élément selon l'invention en une seule pièce ;
la figure 9 est une vue en coupe, selon une ligne brisée, d'une variante de réalisation d'un élément en une seule pièce.

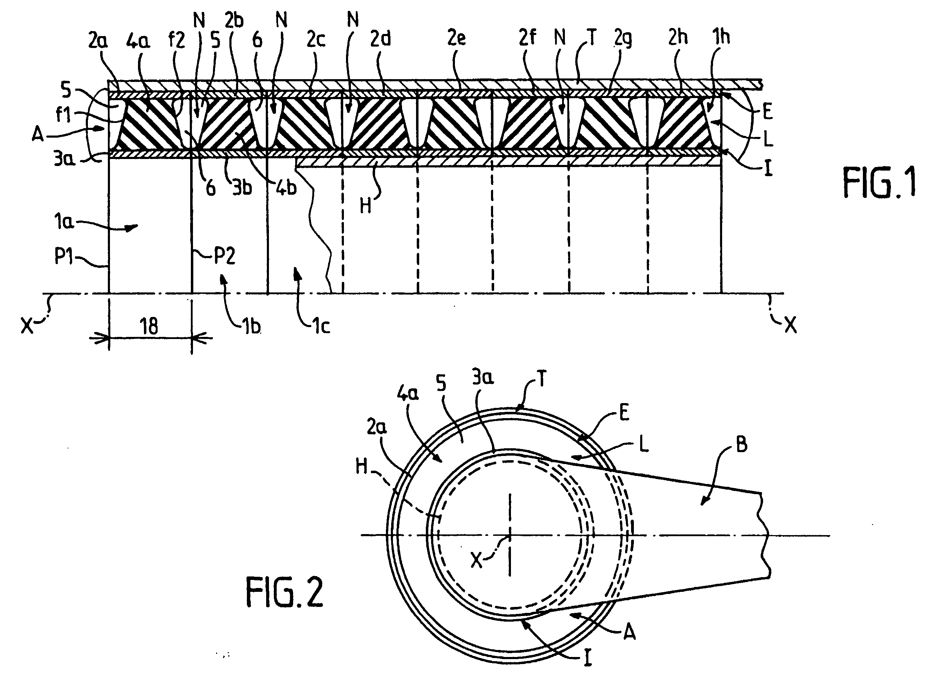

En se reportant aux figures 1 et 2, on peut voir un élément A formant articulation de suspension et ressort de torsion, installé entre deux pièces, à savoir une traverse tubulaire T et un bras B de suspension de roue. Le bras B peut effectuer un mouvement de rotation d'amplitude limitée autour de l'axe géométrique X-X de la traverse T. Ce bras B est solidaire d'un arbre creux H engagé coaxialement dans la traverse T et orthogonal à la partie du bras B située à l'extérieur de la traverse T et orientée sensiblement suivant une direction longitudinale.

L'élément formant articulation A est propre à travailler en torsion sous l'effet des mouvements d'oscillation limités du bras B, et en compression/traction par suite de déplacements limités dans au moins une direction radiale de l'arbre H, notamment direction horizontale et direction verticale.

L'élément formant articulation A comprend une armature extérieure E ancrée à la traverse T et une armature intérieure coaxiale I tubulaire ancrée à l'arbre H engagé dans cette armature I. Un manchon de liaison L en matière élastomère est prévu entre l'armature extérieure E et l'armature intérieure I.

Selon l'invention, l'élément formant articulation A comprend au moins deux éléments de base 1a, 1b travaillant en parallèle. Dans l'exemple illustré sur la figure 1, l'élément formant articulation A comprend huit éléments de base 1a...1h identiques. La description de l'élément 1a s'appliquera donc à tous les éléments de base.

L'élément de base 1a comprend une sous-armature extérieure 2a métallique, une sous-armature intérieure coaxiale 3a métallique et un manchon intermédiaire 4a de liaison, en matière élastomère.

Le manchon intermédiaire 4a comporte deux flancs f1, f2. Au moins un flanc et de préférence les deux flancs f1, f2 présentent une concavité 5, 6. Par concavité, on désigne un espace vide en retrait par rapport à un plan P1, P2 orthogonal à l'axe géométrique de l'élément de base 1a considéré et s'appuyant contre les bords extrêmes des sous-armatures 2a et 3a. La matière élastomère du manchon 4a est pleine entre les flancs f1, f2.

Les éléments de base 1a...1h sont disposés bout à bout, coaxialement. Chaque sous-armature extérieure 2a...2h est ancrée individuellement à la traverse T. De même, les sous-armatures intérieures 3a...3h sont ancrées individuellement à l'arbre H. Les manchons intermédiaires 4a...4h restent indépendants les uns des autres.

L'armature extérieure E et l'armature intérieure I sont ainsi formées par une succession de sous-armatures juxtaposées.

Les concavités 5, 6 des flancs f1, f2 sont prévues suivant toute la circonférence. Lors de la juxtaposition, la concavité 6 d'un flanc droit vient en regard de la concavité 5 du flanc gauche d'un autre élément de base situé sur la droite. Il y a ainsi formation d'alvéoles N de révolution autour de l'axe X-X, situées axialement entre les manchons 4a...4h en matière élastomère. La configuration décrite correspond à l'état de repos de l'articulation.

La présence de ces alvéoles N permet, en cas de compression radiale dans une zone, une déformation relativement libre de la matière élastomère des manchons 4a...4h de sorte que la rigidité radiale dans la direction considérée est abaissée.

Selon la réalisation des figures 1 et 2, les alvéoles N étant de révolution autour de l'axe X-X, la rigidité radiale est sensiblement constante quel que soit l'angle polaire de la direction radiale considérée.

Une articulation de liaison ayant même longueur axiale que l'élément formant articulation et ressort de torsion illustré sur la figure 1 mais qui serait composée d'une seule armature extérieure s'étendant suivant toute la longueur, d'une seule armature intérieure s'étendant suivant toute la longueur, et d'un seul manchon plein en matière élastomère s'étendant également suivant toute la longueur, aurait une rigidité radiale beaucoup plus élevée. En première approximation, on peut indiquer que la rigidité radiale est proportionnelle au carré de la longueur axiale du manchon intermédiaire en matière élastomère. Du fait que les éléments de base 1a...1h travaillent en parallèle, les raideurs élémentaires s'ajoutent. La raideur radiale de l'ensemble, égale à la somme des raideurs individuelles radiales de chaque élément de base sera donc nettement inférieure à la raideur radiale d'une articulation d'une seule pièce ayant même longueur que l'ensemble des huit éléments de base.

La raideur torsionnelle, par contre, est sensiblement proportionnelle à la longueur axiale de l'élément de base, et plus particulièrement du manchon intermédiaire en matière élastomère 4a...4h. Les cavités 5, 6 ont une influence faible sur cette raideur torsionnelle, notamment lorsque le manchon intermédiaire 4a au niveau de son plus petit diamètre et de son plus grand diamètre a une longueur axiale sensiblement égale a celle de la sous-armature intérieure ou extérieure 3a, 2a à laquelle il est fixé, par exemple par adhérisation. De ce fait, la raideur torsionnelle de l'ensemble des huit éléments de base de la figure 1 est sensiblement égale à la raideur torsionnelle d'une articulation de liaison d'une seule pièce dont le manchon intermédiaire. en matière élastomère serait plein et serait un peu moins long que l'ensemble.

Bien entendu, l'exemple fourni avec huit éléments de base pour constituer l'élément formant articulation de suspension et ressort de torsion n'est pas limitatif.

Disposant d'un élément de base 1a ayant une raideur torsionnelle déterminée, il suffit, pour obtenir une raideur torsionnelle cible de l'élément formant articulation de suspension et ressort de torsion, de placer en parallèle autant d'éléments de base que nécessaire.

Comme les sous-armatures métalliques extérieures 2a...2h et intérieures 3a...3h sont en appui axial les unes contre les autres, la longueur axiale d'un élément formant articulation constitué par un ensemble d'éléments de base, pour une raideur torsionnelle donnée, est peu différente d'un élément formant articulation réalisé avec une armature extérieure et une armature intérieure d'une seule pièce. Par contre, selon l'invention, la raideur radiale est plus faible.

A titre d'exemple numérique non limitatif, la raideur torsionnelle d'un élément formant articulation de suspension et ressort de torsion de véhicule peut être d'environ 34 mN par degré d'angle. Cette raideur torsionnelle, dans le cas d'une articulation classique composée d'une seule armature extérieure, d'un seul manchon intermédiaire en matière élastomère, et d'une seule armature intérieure, peut être obtenue avec une longueur axiale moyenne de 107 mm. La raideur radiale est d'environ 27 kN/mm.

Selon l'invention, en réalisant un tel élément formant articulation de suspension et ressort de torsion avec deux éléments de base de même diamètre extérieur et intérieur que l'articulation classique, mais dont la longueur moyenne est la moitié de la longueur totale, soit environ 53,5 mm, on conserve la même raideur torsionnelle d'environ 34 mN par degré d'angle, mais la raideur radiale est sensiblement divisée par deux.

Dans le cas où on réalise l'élément formant articulation à l'aide de quatre éléments de base de même diamètre extérieur et intérieur que l'articulation classique, mais de longueur moyenne égale au quart de la longueur totale, soit environ 26,75 mm, on conserve la raideur torsionnelle d'environ 34 mN par degré d'angle, mais la raideur radiale est de l'ordre de 7,3 kN/mm, c'est à dire presque divisée par quatre.

Enfin, dans le cas où l'on constitue l'élément formant articulation avec huit éléments de base de même diamètre extérieur et intérieur que l'articulation classique comme illustré sur la figure 1, chaque élément de base ayant une longueur moyenne égale au huitième de la longueur initiale, soit environ 13,4 mm, on conserve la raideur torsionnelle de 34 mN par degré d'angle, mais on abaisse la raideur radiale à environ 4 kN/mm, au lieu des 27 kN/mm de la pièce d'origine pleine classique. Les valeurs précédemment citées sont des ordres de grandeur valables pour des articulations à flancs parallèles. Une géométrie trapézoïdale, par exemple, conduira à quelques variations.

Le profil des cavités 5, 6 n'est pas prépondérant pour l'abaissement de la rigidité radiale dans la mesure où des alvéoles N sont formées, permettant une libre déformation de la matière élastomère. Toutefois, le profil des cavités 5, 6 influence sensiblement la tenue en fatigue de l'élément de base. Il convient donc de s'assurer d'une forme optimisée.

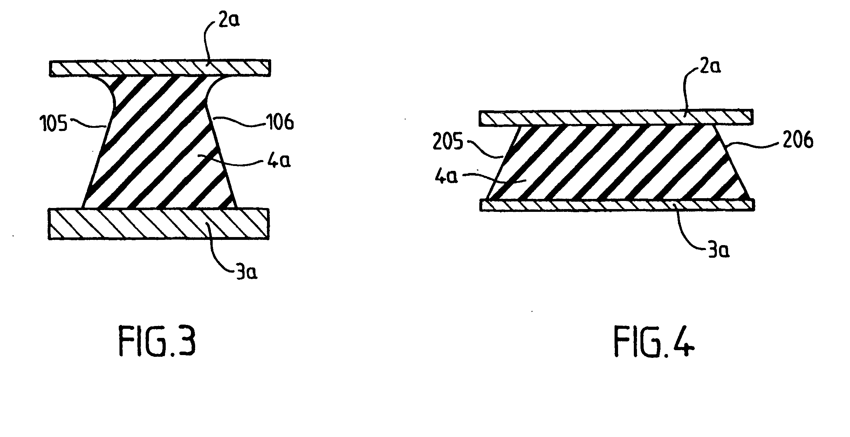

La figure 3 montre des cavités 105, 106 à profil courbe sensiblement en forme d'arc d'hyperbole dont le foyer est plus proche de la sous-armature extérieure 2a que de la sous-armature intérieure 3a.

Selon une autre possibilité avantageuse, illustrée sur la figure 4, la section radiale du manchon intermédiaire 4a en matière élastomère a une forme trapézoïdale définissant des cavités 205, 206 dont la section radiale est un segment de droite incliné. La grande base de la section trapézoïdale est située sur la sous-armature intérieure 3a.

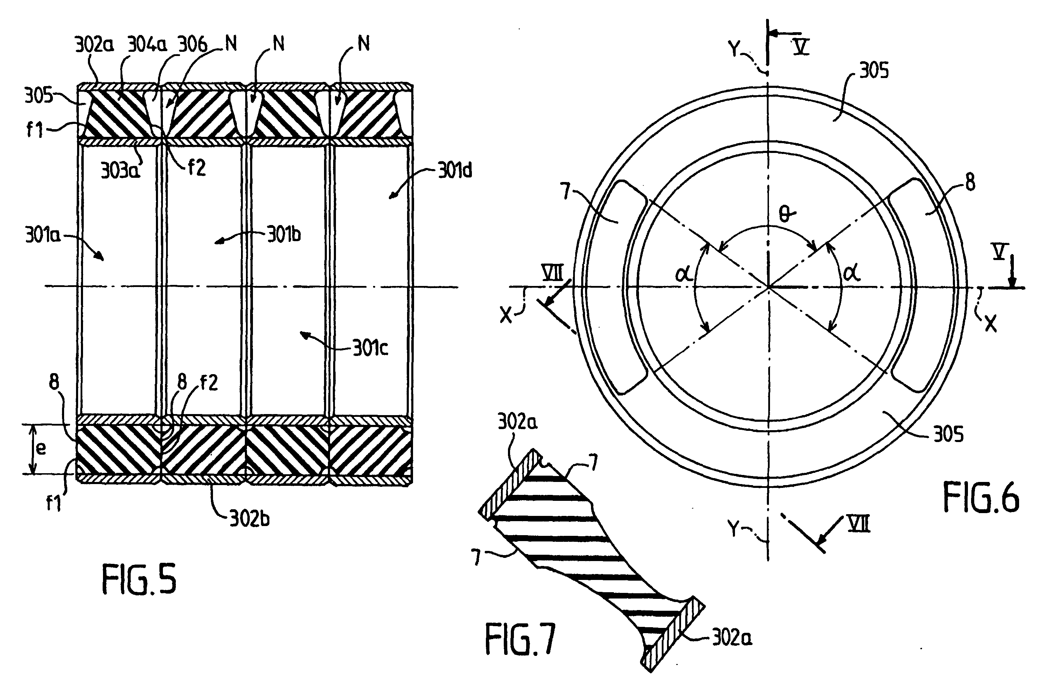

Les figures 5 à 7 illustrent une variante de réalisation dans le cas où l'application nécessiterait une raideur radiale élevée suivant une direction polaire ou une plage de directions polaires déterminée.

Selon l'exemple représenté sur la figure 5, l'élément formant articulation de suspension et ressort de torsion est constitué de quatre éléments de base 301a...301d disposés pour travailler en parallèle. Les parties identiques ou jouant des rôles semblables à des parties déjà décrites à propos des figures 1 et 2 sont désignées par la somme du nombre 300 et de la référence numérique utilisée sur les figures précédentes sans que leur description soit reprise.

La différence entre la variante des figures 5 et 6 et celle des figures 1 et 2 réside en ce que le manchon intermédiaire 304a en matière élastomère de l'élément de base 301a comporte, sur chacun de ses flancs, un ou plusieurs évidements 305, 306 qui s'étendent suivant une partie seulement de la circonférence. Comme visible sur la figure 6, deux évidements 305, ou 306, s'étendent suivant deux arcs diamétralement opposés de la circonférence, l'étendue angulaire θ de chaque arc étant d'environ 110°. Cette valeur numérique n'est pas limitative.

Les deux arc évidés 305, symétriques par rapport à l'axe de l'élément de base de l'élément formant articulation, sont séparés par deux zones 7, 8 dans lesquelles la matière élastomère affleure le plan orthogonal à l'axe de l'élément de base et s'appuyant contre les extrémités axiales des sous-armatures 302a, 303a. Les zones 7, 8 s'étendent suivant un angle α d'environ 70° dans l'exemple représenté.

Les éléments de base 301a...301d sont identiques et leur montage est indexé angulairement de telle sorte que les zones 7, 8 d'éléments de base adjacents viennent en regard les unes des autres, tandis que les flancs évidés 305, 306 viennent également en regard.

Avec une telle disposition, la rigidité radiale suivant la direction moyenne des zones 7, 8, c'est-à-dire suivant la direction X-X de la figure 6 est nettement plus élevée que suivant la direction radiale Y-Y correspondant à la direction moyenne des flancs évidés 305, 306.

La dimension des zones 7 et 8 suivant la direction parallèle à l'axe de l'élément de base peut être telle que, sans charge radiale, les faces des zones 7 et 8 soient en contact, avec éventuellement une légère précompression axiale. Dans ce cas, la rigidité radiale suivant la direction X-X sera sensiblement linéaire.

Il est également possible de prévoir, en l'absence de charge radiale, un jeu réduit entre les faces en regard des zones 7 et 8, ce jeu pouvant être sensiblement de 0,01e à 0,1e, e étant la dimension radiale (figure 5) de la zone 7, 8. Dans ce cas, la rigidité radiale suivant la direction X-X n'est plus linéaire. Relativement faible au début d'un déplacement radial, elle devient nettement plus forte par la suite.

Dans un élément formant articulation de suspension et ressort de torsion conforme à l'invention la matière élastomère travaille dans de meilleures conditions, et son endurance est améliorée.

Le caractère modulaire de l'élément formant articulation de suspension et ressort de torsion constitué d'éléments de base juxtaposés permet une déclinaison aisée de l'application dans une gamme véhicule chez un constructeur. L'augmentation de la raideur torsionnelle est obtenue en ajoutant un ou plusieurs éléments de base.

Les dimensions réduites des éléments de base permettent d'utiliser des presses de moulage de petites dimensions et un faible volume d'injecteur.

Il est en outre possible de réduire les dispersions de raideur de l'élément formant articulation de suspension et ressort de torsion en choisissant un panachage judicieux des éléments de base.

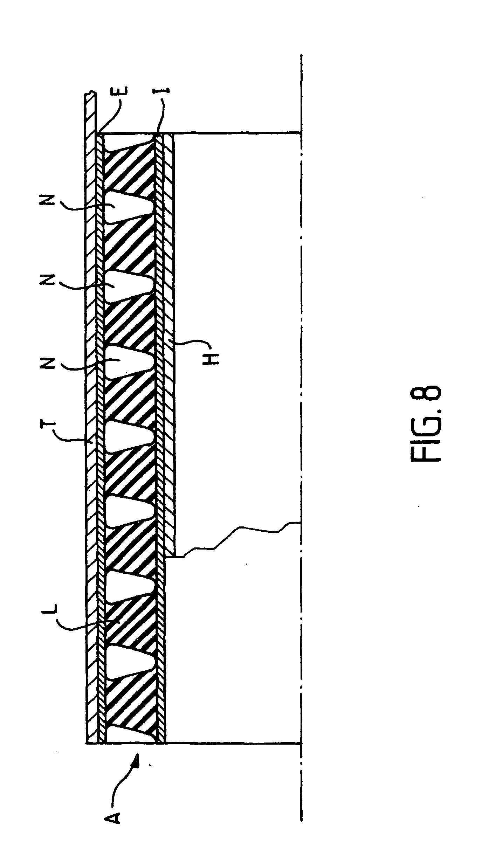

La figure 8 représente un autre mode de réalisation de l'invention et correspond à la figure 1.

A la différence du dispositif de la figure 1, les armatures externe E et interne I ne sont pas constituées par la juxtaposition côte à côte d'éléments de base 1a, 1b, etc, mais par un tube cylindrique en une seule pièce.

Le manchon en élastomère n'est plus constitué par la juxtaposition d'éléments de manchon 4a, 4b, mais par un manchon L en une seule pièce.

Dans ce manchon L, on a ménagé une pluralité d'alvéoles N de révolution.

Ces alvéoles peuvent s'étendre sur toute la circonférence du manchon L ou seulement sur une partie.

Cette disposition en une seule pièce des sous-armatures E et I et du manchon L donne moins de souplesse de réglage que la disposition en éléments modulaires tels que ceux du premier mode de réalisation, mais leur mise en place est plus facile.

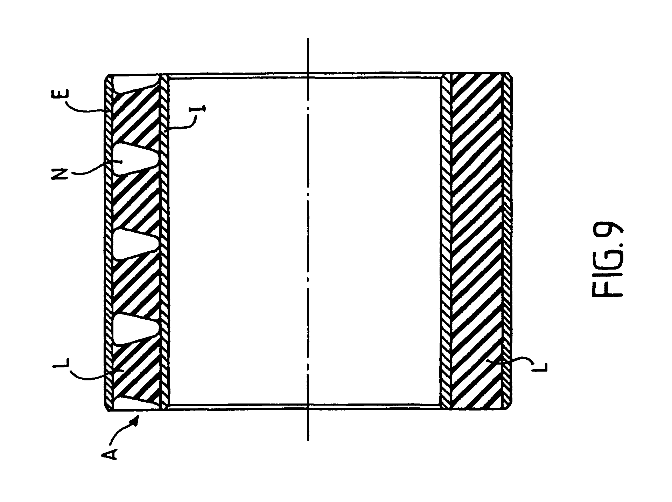

On peut, d'ailleurs, sans pour autant sortir de l'invention, combiner les deux modes de réalisation en mettant côte à côte plusieurs éléments en une seule pièce tels que ceux des figures 8 et 9.

Comme cela est représenté aussi bien aux figures 1 et 5 qu'aux figures 8 et 9, les alvéoles N, qu'elles soient formées par la juxtaposition de deux concavités ou bien qu'elles soient ménagées dans la masse du manchon L, ont une section trapézoïdale aux angles arrondis, la grande base du trapèze étant liée à l'armature tubulaire E, la petite base du trapèze étant liée à la sous-armature intérieure I. Les angles sont arrondis de façon que, aussi bien dans le cas des figures 1 à 5 que dans celui des figures 8 et 9, il n'y ait pas de solution de continuité dans la masse de l'élastomère L (ou, en d'autres termes, que le métal ne soit jamais apparent ni sur la paroi interne de l'armature extérieure E ni sur la paroi externe de l'armature intérieure I).

De plus, l'invention n'est pas limitée au cas ou l'angle α est de 70°, cet angle pouvant varier de 20° à 160°.

## Revendications

1. Elément formant articulation de suspension et ressort de torsion destiné à être installé entre deux pièces susceptibles d'une rotation relative limitée autour d'un axe de rotation et de déplacements relatifs limités dans au moins une direction radiale, ledit élément comprenant une armature tubulaire extérieure (E) propre à être rendue solidaire de l'une des pièces, une armature tubulaire intérieure (I) propre à être rendue solidaire de l'autre pièce et un manchon intermédiaire de liaison (L) en matière élastomère, solidaire sans glissement possible des armatures extérieure (E) et intérieure (I) ; **caractérisé par le fait que** ledit manchon élastomère (L) comporte au moins deux alvéoles (N) s'étendant le long de sa circonférence ; de telle sorte que la raideur radiale de l'articulation soit significativement réduite au moins dans certaines directions, sans que sa raideur torsionnelle ne soit significativement réduite.

2. Elément selon la revendication 1, dans lequel chaque alvéole (N) peut s'étendre sur tout ou partie de la circonférence du manchon (L).

3. Elément selon la revendication 2, dans lequel le manchon (L) comporte une pluralité d'alvéoles (N) disposées parallèlement les unes aux autres le long de l'axe longitudinal de l'articulation.

4. Elément formant articulation de suspension selon la revendication 1, dans lequel les armatures externe (E) et interne (I) ainsi que le manchon (L) sont constitués d'une pluralité d'éléments de base modulaires, disposés côte à côte.

5. Elément selon la revendication 4,
**caractérisé par le fait qu'**il comprend au moins deux éléments de base (1a, 1b,.. ; 301a, 301b...) travaillant en parallèle, chaque élément de base comprenant une sous-armature extérieure (2a, 2b,.. ; 302a, 302b...), une sous-armature intérieure (3a, 3b,.. ; 303a, 303b...) et un manchon intermédiaire de liaison (4a, 4b,.. ; 304a, 304b...) en matière élastomère solidaire sans glissement possible des sous-armatures extérieure et intérieure, dont au moins un flanc (f1, f2) présente une concavité (5, 6 ; 105, 106 ; 205, 206 ; 305, 306) sur au moins une partie de sa circonférence, les éléments de base (1a, 1b,.. ; 301a, 301b...) étant disposés bout à bout de sorte que l'armature extérieure (E) et l'armature intérieure (I) sont formées respectivement par une succession de sous-armatures indépendantes et adjacentes, tandis que les concavités des flancs forment au moins une alvéole (N) au niveau de la matière élastomère.

6. Elément selon la revendication 5, **caractérisé par le fait qu'**une concavité (5, 6 ; 105, 106 ; 205, 206 ; 305, 306) est prévue sur chaque flanc (f1, f2) du manchon intermédiaire de liaison (4a, 4b,.. ; 304a, 304b...) en matière élastomère.

7. Elément selon la revendication 5 ou 6, **caractérisé par le fait que** la concavité (5, 6 ; 105, 106 ; 205, 206 ; 305, 306) prévue sur un ou chaque flanc du manchon de liaison s'étend suivant toute la circonférence.

8. Elément selon la revendication 5 ou 6, **caractérisé par le fait que** la concavité (305, 306) prévue sur un ou chaque flanc du manchon de liaison s'étend suivant une partie seulement de la circonférence, et les éléments de base successifs ont même orientation angulaire de sorte que les concavités (305, 306) soient côte à côte, ainsi que les parties pleines (7, 8) des flancs.

9. Elément selon la revendication 8, **caractérisé par le fait qu'**il existe une direction radiale selon laquelle la raideur radiale est maximale, la raideur radiale étant minimale selon la direction perpendiculaire à la précédente.

10. Elément selon l'une des revendications précédentes, **caractérisé par le fait que** la sous-armature extérieure (2a, 2b.. ; 302a, 302b...) et la sous-armature intérieure (3a, 3b.. ; 303a, 303b..) de chaque élément de base (1a, 1b.. ; 301a, 301b..) est métallique et le manchon intermédiaire de liaison (4a, 4b.. ; 304a, 304b..) en matière élastomère est adhérisé extérieurement et intérieurement respectivement à la sous-armature extérieure et à la sous-armature intérieure.

11. Elément selon l'une des revendications précédentes, **caractérisé par le fait qu'**il comporte quatre ou huit éléments de base (1a, 1b,...1h) disposés bout à bout.

12. Elément selon l'une des revendications précédentes, dans lequel les alvéoles (N) peuvent être disposées par paires, symétriquement à l'axe longitudinal de la suspension, en formant deux arcs de cercle dont l'angle peut varier de 20° à 160°, ce qui permet de déterminer à volonté le degré d'affaiblissement de la raideur radiale.

13. Elément selon l'une quelconque des revendications 1 à 12, dans lequel les alvéoles (N) ont une section trapézoïdale aux angles arrondis, la grande base du trapèze étant située sur la sous-armature (E) et la petite base sur la sous-armature (I).

14. Elément selon la revendication 13, dans lequel les angles de la section en trapèze sont arrondis de façon qu'il n'y ait pas de solution de continuité dans la matière de l'élastomère du manchon (L), que ce dernier soit en une seule pièce ou en plusieurs éléments juxtaposés.

## Patentansprüche

1. Element, das eine Aufhängungsgelenk und eine Torsionsfeder bildet und dazu bestimmt ist, zwischen zwei Stücken, die zu einer relativen, begrenzten Drehung um eine Drehachse und zu relativen Verlagerungen in mindestens einer radialen Richtung befähigt sind, eingebaut zu werden, wobei das genannte Element eine rohrförmige, äußere Bewehrung (E), die geeignet ist, fest mit einem der Stücke verbunden zu werden, eine rohrförmige, innere Bewehrung (I), die geeignet ist, fest mit dem anderen Stück verbunden zu werden, und eine Zwischen-Verbindungsmuffe (L) aus Elastomermaterial aufweist, die fest und ohne mögliche Gleitbewegung mit der äußeren (E) und inneren Bewehrung (I) verbunden ist, **dadurch gekennzeichnet, daß** die genannte Elastomermuffe (L) mindestens zwei Zellen (N) aufweist, die sich längs ihres Umfangs erstrecken, so daß die radiale Gelenksteifigkeit mindestens in bestimmten Richtungen beträchtlich verringert wird, ohne daß ihre Torsionssteifigkeit beträchtlich verringert wird.

2. Element nach Anspruch 1, worin sich jede Zelle (N) über den gesamten Umfang der Muffe (L) oder einen Teil dessen erstrecken kann.

3. Element nach Anspruch 2, worin die Muffe (L) eine Vielzahl von Zellen (N) aufweist, die zueinander parallel längs der Längsachse des Gelenks angeordnet sind.

4. Element, das ein Aufhängungsgelenk nach Anspruch 1 bildet, worin die äußere (E) und innere Bewehrung (I) sowie die Muffe (L) aus einer Vielzahl von modularen Grundelementen gebildet sind, die nebeneinander angeordnet sind.

5. Element nach Anspruch 4, **dadurch gekennzeichnet, daß** es mindestens zwei Grundelemente (1a, 1b,...; 301a,, 301b...) aufweist, die parallel verlaufen, wobei jedes Grundelement eine äußere Teilbewehrung (2a, 2b, ...; 302a, 302b...), eine innere Teilbewehrung (3a, 3b, ...; 303a, 303b...) und eine dazwischenliegende Verbindungsmuffe (4a, 4b, ...; 304a, 304b ...) aus Elastomermaterial fest ohne mögliches Gleiten der äußeren und inneren Teilbewehrung aufweist, von denen mindestens eine Flanke (f1, f2) eine konkave Ausbildung (5, 6; 105, 106; 205, 206; 305, 306) auf mindestens einem Teil ihres Umfangs aufweist, und wobei die Grundelemente (1a, 1b, ...; 301a, 301 b... ) stumpf aneinanderstoßend angeordnet sind, so daß die äußere Bewehrung (E) und die innere Bewehrung (I) jeweils durch eine Folge der unabhängigen und nebeneinanderliegenden Teilbewehrungen gebildet sind, während die konkaven Ausbildungen der Flanken mindestens eine Zelle (N) auf Höhe des Elastomermaterials bilden.

6. Element nach Anspruch 5, **dadurch gekennzeichnet, daß** eine konkave Ausbildung (5, 6; 105, 106; 205, 206; 305, 306) auf jeder Flanke (f1, f2) der dazwischenliegenden Verbindungsmuffe (4a, 4b, ...; 304a, 304b...) aus Elastomermaterial vorgesehen ist.

7. Element nach Anspruch 5 oder 6, **dadurch gekennzeichnet, daß** die konkave Ausbildung (5, 6; 105, 106; 205, 206; 305, 306), die auf der oder jeden Flanke der Verbindungsmuffe vorgesehen ist, sich über den gesamten Umfang erstreckt.

8. Element nach Anspruch 5 oder 6, **dadurch gekennzeichnet, daß** die konkave Ausbildung (305, 306), die auf der oder jeder Flanke der Verbindungsmuffe vorgesehen ist, sich nur über einen Teil des Umfangs erstreckt, und daß die aufeinanderfolgenden Grundelemente die selbe Winkelausrichtung haben, so daß die konkaven Ausbildungen (305, 306) wie auch die massiven Teile (7, 8) der Flanken aneinander anliegen.

9. Element nach Anspruch 8, **dadurch gekennzeichnet, daß** es eine radiale Richtung gibt, in der die radiale Steifigkeit maximal ist, während die radiale Steifigkeit in der Richtung senkrecht zur vorausgehenden minimal ist.

10. Element nach einem der vorausgehenden Ansprüche, **dadurch gekennzeichnet, daß** die äußere Teilbewehrung (2a, 2b, ...; 302a, 302b...) und die innere Teilbewehrung (3a, 3b, ...; 303a, 303b...) eines jeden Grundelements (1a, 1b,...; 301a, 301b...) aus Metall ist, und daß die dazwischenliegende Verbindungsmuffe (4a, 4b, ...; 304a, 304b...) aus Elastomermaterial jeweils außen und innen an der Teilbewehrung festhaftet.

11. Element nach einem der vorausgehenden Ansprüche, **dadurch gekennzeichnet, daß** es vier oder acht Grundelemente (1a, 1b, ... 1h) aufweist, die stumpf aneinanderstoßen.

12. Element nach einem der vorausgehenden Ansprüche, worin die Zellen (N) paarweise symmetrisch zur Längsachse der Aufhängung angeordnet sein können, indem sie zwei Kreisbogen bilden, deren Winkel sich von 20° bis 160° ändern kann, was es gestattet, wunschgemäß den Schwächungsgrad der radialen Steifigkeit zu bestimmen.

13. Element nach einem der Ansprüche 1 bis 12, worin die Zellen (N) einen trapezförmigen Querschnitt mit abgerundeten Ecken haben, wobei die große Basis des Trapezes auf der Teilbewehrung (E) und die kleine Basis auf der Teilbewehrung (I) liegt.

14. Element nach Anspruch 13, worin die Winkel des trapezförmigen Querschnitts derart ausgerundet sind, daß es keine Unterbrechung der Stetigkeit im Elastomermaterial der Muffe (L) gibt, gleichgültig, ob diese einstückig ist oder aus mehreren, nebeneinanderliegenden Elementen besteht.

## Claims

1. Element forming a suspension articulation and torsion spring intended to be installed between two parts capable of limited relative rotation about an axis of rotation and of limited relative displacement in at least one radial direction, the said element comprising an exterior tubular frame (E) capable of being secured to one of the parts, an interior tubular frame (I) capable of being secured to the other part and an intermediate linking sleeve (L) made of elastomer, secured without the possibility of slippage to the exterior (E) and interior (I) frames; **characterized in that** the said elastomer sleeve (L) comprises at least two cells (N) extending along its circumference; so that the radial stiffness of the articulation is significantly reduced in at least some directions without its torsional stiffness being significantly reduced.

2. Element according to Claim 1, in which each cell (N) may extend over all or part of the circumference of the sleeve (L).

3. Element according to Claim 2, in which the sleeve (L) comprises a number of cells (N) arranged parallel to one another along the longitudinal axis of the articulation.

4. Element forming a suspension articulation according to Claim 1, in which the outer (E) and inner (I) frames and the sleeve (L) consist of a number of modular basic elements placed side by side.

5. Element according to Claim 4, **characterized in that** it comprises at least two basic elements (1a, 1b,...; 301a, 301b...) working in parallel, each basic element comprising an exterior subframe (2a, 2b,...; 302a, 302b...), an interior subframe (3a, 3b,...; 303a, 303b...) and an intermediate linking sleeve (4a, 4b,...; 304a, 304b...) made of elastomer, secured without the possibility of slippage to the exterior and interior subframes, at least one flank (f1, f2) of which has a concave portion (5, 6; 105, 106; 205, 206; 305, 306) on at least part of its circumference, the basic elements (1a, 1b,...; 301a, 301b...) being arranged end to end so that the exterior frame (E) and the interior frame (I) are formed respectively by a succession of independent and adjacent subframes, while the concave portions of the flanks form at least one cell (N) in the elastomer.

6. Element according to Claim 5, **characterized in that** a concave portion (5, 6; 105, 106; 205, 206; 305, 306) is provided on each flank (f1, f2) of the intermediate linking sleeve (4a, 4b...; 304a, 304b...) made of elastomer.

7. Element according to Claim 5 or 6, **characterized in that** the concave portion (5, 6; 105, 106; 205, 206; 305, 306) provided on one or each flank of the linking sleeve extends along the entire circumference.

8. Element according to Claim 5 or 6, **characterized in that** the concave portion (305, 306) provided on one or each flank of the linking sleeve extends over just part of the circumference, and the successive basic elements have the same angular orientation so that the concave portions (305, 306) are side by side as are the solid parts (7, 8) of the flanks.

9. Element according to Claim 8, **characterized in that** there is a radial direction in which the radial stiffness is at a maximum, the radial stiffness being at a minimum in the direction perpendicular to the previous direction.

10. Element according to one of the preceding claims, **characterized in that** the exterior subframe (2a, 2b...; 302a, 302b...) and the interior subframe (3a, 3b...; 303a, 303b...) of each basic element (1a, 1b...; 301a, 301b...) is made of metal and the intermediate linking sleeve (4a, 4b...; 304a, 304b...) made of elastomer is bonded on its exterior and on its interior to the exterior subframe and to the interior subframe respectively.

11. Element according to one of the preceding claims, **characterized in that** it comprises four or eight basic elements (1a, 1b,...1h) placed end to end.

12. Element according to one of the preceding claims, in which the cells (N) may be arranged in pairs, so that they are symmetric with respect to the longitudinal axis of the suspension, forming two arcs of a circle, the angle of which can vary from 20° to 160°, which makes it possible to determine the amount of lessening of the radial stiffness as desired.

13. Element according to any one of Claims 1 to 12 in which the cells (N) have a trapezoidal cross section with rounded corners, the large base of the trapezium being located on the subframe (E) and the small base on the subframe (I).

14. Element according to Claim 13 in which the corners of the trapezium cross section are rounded in such a way that there is no discontinuity in the elastomer of the sleeve (L), whether the latter be made of a single piece or of a number of juxtaposed elements.
